# FASCICULE DE BREVET EUROPEEN

(11) **EP 0 695 135 B1**
(45) Date de publication et mention de la délivrance du brevet: **28.10.1998**
(21) Numéro de dépôt: 94913663.4
(22) Date de dépôt: 19.04.1994
(51) Int. Cl.: A47J 37/04, A47J 37/07

(54) **TOURNE-BROCHETTES AUTOMATIQUE**
GRILLSPIESSANTRIEB
DEVICE FOR AUTOMATICALLY ROTATING ROTISSERIE SKEWERS

(30) Priorité: 22.04.1993 EP 93401056
(43) Date de publication de la demande: 07.02.1996
(73) Titulaire: Coutant, Jean-Noel, F-64600 Anglet (FR)
(72) Inventeur: Coutant, Jean-Noel, F-64600 Anglet (FR)
(74) Mandataire: Casalonga, Axel
(86) Numéro de dépôt international: FR9400436
(87) Numéro de publication internationale: WO9423628

(56) Documents cités:
- DE-A- 1 404 775
- FR-A- 2 682 583
- GB-A- 926 692
- US-A- 2 391 571
- US-A- 3 866 527
- US-A- 4 154 154

## Description

La présente invention concerne un tourne-brochettes automatique permettant de réaliser la cuisson d'aliments embrochés, tels que viande, poissons, légumes, à proximité d'une source de chaleur.

Traditionnellement, on réalise la cuisson des brochettes d'aliments au-dessus d'un foyer. L'utilisateur tourne manuellement les piques de brochettes de façon à obtenir une cuisson uniforme et optimale des aliments embrochés. Cette cuisson à commande manuelle nécessite que l'utilisateur soit suffisamment disponible et vigilant pour surveiller et tourner les brochettes afin d'éviter que les aliments ne soient pas partiellement trop cuits et partiellement crus.

On connaît par le brevet américain US 3 939 761 (Mc GINTY) un barbecue équipé d'un boîtier rectangulaire ouvert vers le haut dont les panneaux frontal et arrière présentent des paires d'encoches verticales pour recevoir des piques de brochettes. Chaque pique de brochette présente une poignée pourvue d'une roue dentée qui s'engrène dans une chaîne sans fin. La chaîne sans fin est entraînée en déplacement le long du panneau frontal à l'aide d'un moteur. Le déplacement de la chaîne sans fin entraîne en rotation les roues dentées et donc les piques de brochettes au-dessus du foyer.

La demande de brevet allemand DE-1 404 775 (OATLEY) montre un appareil tourne-brochettes comportant une vis sans fin entraînée par moteur. La vis sans fin est disposée parallèlement au panneau frontal de l'appareil et s'engrène avec des roues dentées des piques de brochettes. Ainsi, les piques de brochettes sont entraînées en rotation via leurs roues dentées par la vis sans fin.

On connaît par ailleurs par le brevet américain US 4 154 154 (VIVIAN) un dispositif de tourne-brochettes qui à la différence du dispositif décrit dans le document OATLEY précité, impose que les piques de brochettes soient supportées en porte à faux, c'est-à-dire que chaque pique de brochette présente une extrémité non supportée. Chaque pique de brochette est entraînée en rotation par une vis sans fin mue par un moteur via une roue dentée associée à la pique de brochette.

Les techniques actuelles rappelées ci-dessus permettent certes de fournir à l'utilisateur des tourne-brochettes automatiques pour réaliser des brochettes. Mais en cas de blocage intempestif en rotation de l'une des piques de brochettes, le tourne-brochettes classique devient inutilisable. En effet, le blocage en rotation d'une pique de brochette se traduit par le blocage en rotation de la roue dentée qui lui est associée. Le blocage de la roue dentée entraîne le blocage de la chaîne sans fin ou la vis sans fin d'entraînement qui est en prise avec ladite roue dentée, puisque le moteur d'entraînement est choisi en général pour produire un couple d'entraînement qui n'est pas excessif par rapport à ce qui est nécessaire pour le fonctionnement normal du tourne-brochettes. Il en résulte que le moindre blocage au niveau d'une pique de brochette entraîne le blocage complet du tourne-brochettes, ce qui d'une part provoque des détériorations au niveau du moteur et des organes d'entraînement, et d'autre part une cuisson hétérogène de l'ensemble des brochettes si l'utilisateur n'est pas informé à temps du blocage du tourne-brochettes.

Le blocage intempestif du tourne-brochettes peut être la conséquence du grippage du mécanisme d'entraînement notamment entre les poignées des piques de brochette et les encoches du panneau frontal du tourne-brochettes. Ce grippage est provoqué par la détérioration des surfaces de contact entre les organes métalliques du mécanisme d'entraînement due notamment à la corrosion, car le tourne-brochettes est souvent utilisé en plein air et donc exposé aux intempéries.

En outre, les tourne-brochettes classiques ne peuvent pas être utilisés verticalement et nécessitent des piques de brochettes spécifiques sans qu'il soit possible, pour un tourne-brochette donné, d'utiliser des types différents de piques de brochettes vendues dans le commerce.

La présente invention a pour objet de pallier la déficience technique des tourne-brochettes automatiques existants à l'aide d'un mécanisme d'embrayage et de débrayage automatique de la ou des pique(s) de brochettes bloquée(s) en rotation, de façon à permettre aux autres piques de brochettes de continuer à être entraînées en rotation par le moteur.

L'invention a également pour objet un tourne-brochettes de conception simple et dont le prix de revient est faible, permettant d'obtenir sans contrainte mécanique, une cuisson uniforme des aliments embrochés qui ne sont pas secs, le jus de ces aliments étant retenu sur les aliments grâce à la rotation permanente et régulière des piques de brochettes.

Selon l'invention, on réalise un tourne-brochettes automatique qui comprenant un support comportant un panneau frontal et un panneau arrière, qui sont pourvus chacun d'encoches sur le bord supérieur pour recevoir des piques de brochettes. Chaque pique de brochette est équipée à l'une de ses extrémités d'une poignée présentant une roue dentée. Une vis sans fin animée par un moteur entraîne en rotation les roues dentées associées aux piques de brochettes.

Selon l'invention, des moyens sont prévus pour permettre le débrayage automatique d'une roue dentée par rapport à la vis sans fin d'entraînement en cas de blocage de la pique de brochette associée à ladite roue dentée.

Selon un mode préféré de réalisation de l'invention, chaque encoche du panneau frontal présente un profil coudé ouvert en haut avec le bord extérieur du coude arrondi. Chaque poignée de pique de brochette présente une rainure circulaire périphérique permettant le positionnement et le maintien de la poignée dans l'encoche coudée. Avantageusement les encoches du panneau frontal présentent une partie sensiblement verticale débouchant dans le bord supérieur du panneau et une partie coudée légèrement inclinée vers le fond de l'encoche. Un tel profil favorise le mécanisme de débrayage des roues dentées en cas de blocage comme il sera décrit par la suite.

L'invention sera mieux comprise et d'autres caractéristiques apparaîtront à l'aide de la description détaillée de quelques modes de réalisation pris à titre nullement limitatif et illustrés par des dessins annexés, sur lesquels :
la figure 1 est une vue schématique d'un tourne-brochettes automatique selon l'invention,
la figure 2 est une vue partielle en coupe le long d'une pique de brochette du tourne-brochettes de la figure 1,
les figures 3a à 3d représentent des schémas explicatifs du mode de débrayage et d'embrayage d'une roue dentée par rapport à la vis sans fin d'entraînement selon l'invention, et
les figures 4 à 7 montrent quatre autres modes de réalisation de l'invention.

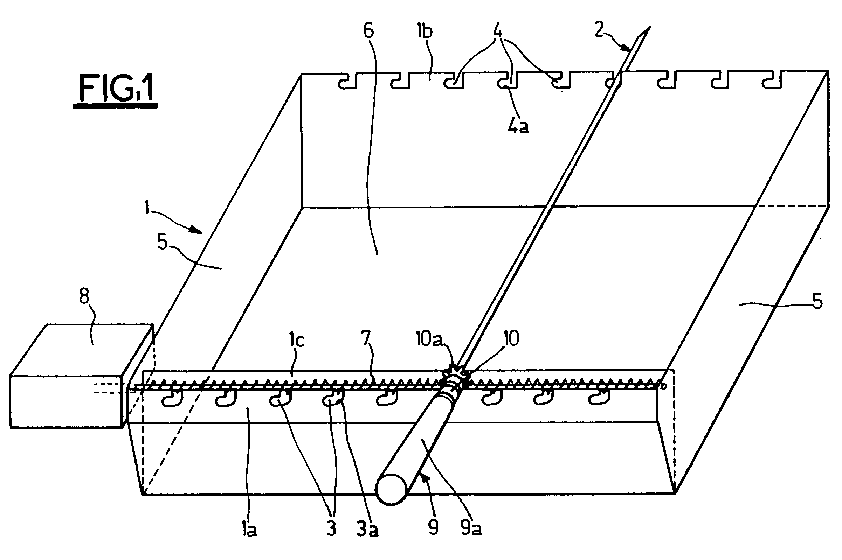

Comme illustré sur la figure 1, le tourne-brochettes automatique selon l'invention comprend un support 1 pour des piques de brochettes 2 et un mécanisme d'entraînement des piques de brochettes. Le support 1 présente un panneau frontal 1a pourvu d'une pluralité d'encoches 3 sur son bord supérieur, et un panneau arrière 1b pourvu également d'une pluralité d'encoches 4 sur son bord supérieur. Les encoches 3 et 4 sont ouvertes vers le haut et s'associent par paire en vue de supporter les deux parties d'extrémité des piques de brochettes 2. Pour simplifier le dessins, seule une pique de brochette est représentée sur la figure 1.

Les panneaux frontal 1a et arrière 1b sont sensiblement parallèles et verticaux et sont reliés l'un à l'autre par deux panneaux latéraux 5 pour former un cadre rectangulaire dont le fond 6 peut être ouvert pour être posé sur un foyer ou fermé par une plaque ou une grille métallique sur laquelle on dispose une source de chaleur pour la cuisson des brochettes.

Derrière le panneau frontal 1a se trouve une cloison verticale 1c de même longueur que le panneau frontal 1a et parallèle à celui-ci en vue de former avec le panneau frontal 1a un compartiment frontal 1d dans lequel est monté une vis sans fin 7, les extrémités de laquelle sont supportées par les deux panneaux latéraux 5 du support 1. Une extrémité de la vis sans fin 7 est accouplée en rotation au moyen d'un carré d'entraînement avec l'axe d'un moteur électrique 8 qui est monté sur un des panneaux latéraux 5 du support. Le moteur électrique 8 peut être entraîné par piles ou branché sur une source électrique au moyen d'un câble électrique non représenté. Le moteur 8 entraîne la vis sans fin 7 en rotation sur elle-même. Chaque pique de brochette 2 est équipée à une extrémité d'une poignée 9 qui présente une partie de liaison 10 en matériau métallique sous forme d'une pièce de forme générale cylindrique pourvue d'une roue dentée 10a destinée à être engrénée avec la vis sans fin 7.

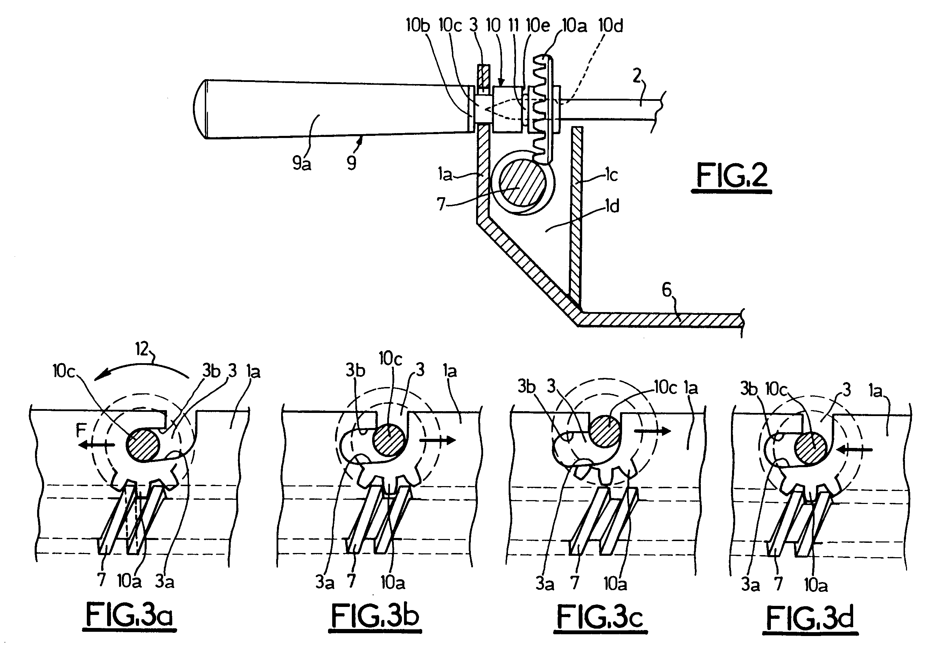

La figure 2 montre plus en détail la structure de la poignée 9 ainsi que le mécanisme d'entraînement en rotation de la pique de brochette 2 par l'intermédiaire de sa poignée 9. La poignée 9 comprend une partie de préhension 9a qui peut être en bois ou en matière plastique faiblement conducteur de chaleur, et une partie de liaison 10 constituée par une pièce cylindrique métallique. La pièce métallique cylindrique 10 présente une extrémité 10b solidaire de la partie de préhension 9a et suivie d'une gorge circulaire périphérique 10c destinée au positionnement et au maintien de la poignée 9 dans une encoche 3 du panneau frontal 1a du support 1. La pièce cylindrique 10 présente une ouverture axiale centrale 10d pour recevoir une extrémité d'une pique de brochette 2. La pique de brochette 2 peut être fixée à demeure sur la pièce métallique 10 ou avantageusement fixée à cette pièce métallique 10 de manière amovible, la fixation pouvant alors être effectuée au moyen d'un clip 11 logé dans une gorge périphérique 10e et bloquant la partie d'extrémité de la pique de brochette 2 dans l'ouverture axiale centrale 10d de la pièce cylindrique de liaison 10. De cette façon, les poignées 9 amovibles peuvent être associées à différents types de piques de brochettes.

La vis sans fin 7 dans le compartiment frontal 1d derrière le panneau frontal 1a s'engrène avec les dents de la roue dentée 10a de la pièce de liaison 10 de la poignée 9. Les dents de la roue dentée 10a sont avantageusement incurvées afin d'augmenter la surface de contact avec le filetage de la vis sans fin 7 et d'améliorer la transmission mécanique entre la vis sans fin 7 et la roue dentée 10a.

En fonctionnement du tourne-brochettes, le moteur électrique 8 entraîne en rotation la vis sans fin 7 qui entraîne à son tour en rotation la roue dentée 10a de la poignée 9. La pique de brochette 2 associée à la poignée 9 est alors entraînée en rotation pour permettre la cuisson des aliments embrochés sur cette pique. La vitesse de rotation de la pique de brochette 2 est commandée par le moteur électrique 8.

En général, on dispose un certain nombre de piques de brochettes 2 sur le support 1. Il arrive parfois que l'une des piques de brochettes 2 soit bloquée en rotation de manière intempestive, ce qui peut se produire par exemple lorsque le tourne-brochette est exposé aux intempéries qui causent un grippage de la pièce métalliques de liaison 10 de la poignée 9 par rapport à la vis sans fin 7 ou/et l'encoche 3 du panneau frontal du support. Le même phénomène peut se produire en cas de friction importante entre les aliments mal embrochés ou mal calibrés sur deux ou plusieurs piques de brochettes continguës. Dans ce cas, l'invention permet d'éviter le blocage du tourne-brochettes et permet aux autres piques de brochettes 2 de continuer à tourner malgré le blocage de l'une d'entre-elles.

Les figures 3a à 3d illustrent ce mécanisme de débrayage automatique de la pique de brochette bloquée par rapport à la vis sans fin d'entraînement avec les états de fonctionnement illustrés.

Sur la figure 3a est représenté l'état normal de fonctionnement du tourne-brochettes avec la roue dentée 10a de la poignée 9 engrénée complètement dans le filetage de la vis sans fin 7 d'entraînement. L'encoche 3 du panneau frontal la présente un profil coudé dont l'ouverture est orientée vers le haut verticalement et dont la partie coudée est orientée sensiblement horizontalement, le profil extérieur du coude étant arrondi. Le bord inférieur 3a de la partie coudée est légèrement incliné vers le fond de l'encoche 3 qui présente un profil semi-circulaire pour recevoir le fond de la gorge annulaire 10c de la pièce de liaison 10 de la poignée. Le filetage ainsi que le sens de rotation de la vis sans fin 7 sont choisis de façon à ce que la roue dentée 10a soit entraînée en rotation dans le sens indiquée par la flèche 12, sens de rotation qui tend à plaquer le fond de la gorge annulaire 10c de la poignée au fond de l'encoche 3 du panneau frontal 1a comme indiqué par la flèche F. La partie coudée de l'encoche 3 présente un bord supérieur 3b qui interdit le mouvement de bas en haut de la poignée pour assurer ainsi un parfait engrenage de la roue dentée 10a sur la vis sans fin 7.

Les figures 3b et 3c illustrent schématiquement le débrayage de la roue dentée 10a, bloquée en rotation, par rapport à la vis sans fin 7. La rotation de la vis sans fin 7 impose, par son filetage, un déplacement de la poignée bloquée vers l'ouverture de l'encoche 3 du panneau frontal la selon le sens fléché en s'éloignant du fond de l'encoche 3 (figure 3b), la légère pente du bord inférieur 3a de la partie coudée de l'encoche 3 favorisant l'éloignement de la roue dentée 10a par rapport à la vis sans fin 7. De même, le profil extérieur arrondi du coude de l'encoche 3 permet le débrayage en douceur de la roue dentée 10a bloquée par rapport à la vis sans fin 7 (figure 3c). Ainsi, le blocage en rotation d'une pique de brochette entraîne automatiquement un débrayage de cette pique par rapport au mécanisme d'entraînement qui continue de fonctionner pour entraîner en rotation les autres piques de brochettes.

Il peut arriver qu'un débrayage partiel de la pique de brochette initialement bloquée suffit à la débloquer (figure 3b). L'invention autorise un tel fonctionnement en semi-débrayé de la pique de brochette concernée sans que le débrayage complet (figure 3c) soit nécessaire.

La figure 3d montre le mécanisme d'embrayage automatique de la roue dentée 10a de la poignée d'une pique de brochette déposée dans l'encoche 3 du panneau frontal 1a, ou juste après le débrayage de cette pique qui était bloquée. Le sens de rotation et le filetage de la vis sans fin 7 entraînent en rotation la roue dentée 10a qui est poussée de ce fait vers le fond de l'encoche 3 comme indiqué par la flèche. Le retour de la roue dentée 10a vers le fond de l'encoche 3 est favorisé par la légère inclinaison du bord inférieur 3a de l'encoche 3. L'embrayage est donc réalisé automatiquement.

Le mécanisme d'embrayage et de débrayage automatique qu'on vient de décrire peut être encore amélioré par une découpe particulière des encoches 4 du panneau arrière 1b du support 1 (figure 1). Le profil de chaque encoche 4 peut être identique au profil des encoches 3 du panneau frontal 1a du support afin que la pique de brochette 2 concernée par l'embrayage et le débrayage ne soit pas désaxée par rapport à la position de fonctionnement normale. Une autre possibilité consiste à prévoir un profil coudé pour les encoches 4 du panneau arrière 1b avec un bord inférieur 4a de la partie coudée sensiblement parallèle au bord supérieur du panneau arrière 1b et avec le profil extérieur du coude en angle droit. Un tel profil de l'encoche 4 favorise le déplacement horizontal de l'extrémité libre de la pique de brochette 2 pendant le mécanisme d'embrayage et de débrayage et empêche cette extrémité libre de la pique de brochette de sortir de l'encoche 4 pendant le débrayage de la pique de brochette. Le profil de l'encoche 4 combiné avec le profil de l'encoche 3 permet de recevoir des piques de brochettes flottantes. En effet, dans le cas de frictions dues à un mauvais calibrage des aliments embrochés sur des piques de brochettes contiguës, les profils particuliers des encoches 3 et 4 permettent un mouvement latéral de droite à gauche ou de gauche à droite des piques de brochettes. Ce mouvement latéral assure un bon positionnement des piques de brochettes en fonction du calibrage des aliments embrochés pour permettre une bonne rotation des piques de brochettes.

Grâce à l'invention, on peut réaliser des tourne-brochettes automatiques particulièrement fiables en fonctionnement, le blocage accidentel de l'une des piques de brochettes entraînant automatiquement le débrayage de celle-ci sans que l'entraînement des autres desdites brochettes soit perturbé.

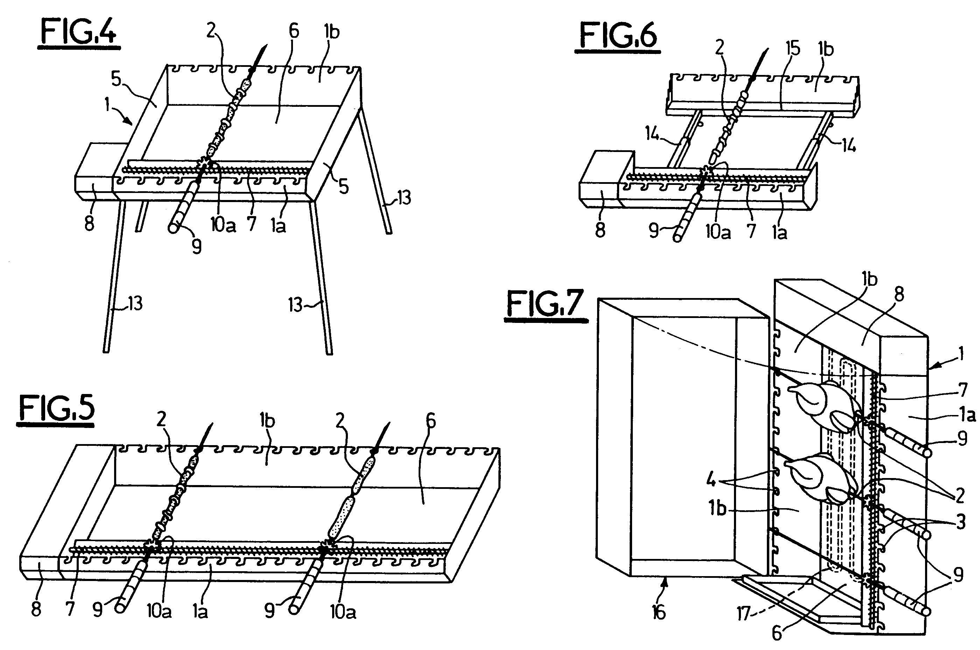

Les figures 4 à 7 montrent quelques applications de l'invention à titre d'exemples. Sur la figure 4 est représenté un barbecue traditionnel réalisé à l'aide de l'invention, le support 1 étant monté sur des pieds 13. Le fond 6 du support 1 servant de support au foyer. La figure 5 montre une table de travail à usage professionnel de grandes dimensions pouvant être encastrée dans un ensemble de cuisine. La figure 6 montre un système en kit autonome adaptable sur d'autres appareils. Les panneaux frontal 1a et arrière 1b sont reliés entre eux par deux montants télescopiques 14 permettant de régler l'écartement entre les deux panneaux. Les panneaux frontal 1a et arrière 1b du support peuvent présenter des glissières 15 permettant aux extrémités des montants 14 de coulisser en vue de régler l'écartement entre les deux montants. Sur la figure 7 est représenté schématiquement un tourne-brochettes électrique à montage vertical. Dans ce cas précis, il est préférable que les encoches 3 et 4 présentent le même profil qui débouche dans le bord des panneaux 1a et 1b du tourne-brochette de façon légèrement inclinée vers le haut. Un tel profil des encoches 3 et 4 permet d'éviter que les piques de brochettes 2 ne puissent facilement quitter les encoches. Un couvercle 16 sous forme d'une porté vitrée peut venir enfermer la face exposée de l'appareil. Le foyer est constitué ici par une résistance électrique 17 disposée dans un plan vertical proche du fond 6 du support 1.

Comme il ressort de la description qui précède, l'invention permet de réaliser un tourne-brochettes automatique qui présente de nombreux avantages. Il est simple, fiable et peu coûteux. Il n'est pas sensible au grippage dû aux intempéries et ne présente pas de blocage possible des autres brochettes en cas de blocage de l'une d'entre elles grâce au mécanisme de débrayage automatique et d'embrayage automatique des poignées associées aux piques de brochettes. Les brochettes sont flottantes dans le sens horizontal (par suite de la largeur des parties coudées des encoches 3 et 4 des panneaux frontal et arrière du support permettant à celles-ci, en cas de mauvais calibrage des aliments embrochés et de friction entre-elles de se positionner correctement pour pouvoir continuer à tourner. Il ne nécessite aucune fixation des piques de brochettes dans le support. La poignée peut être amovible pour recevoir n'importe quel type de piques de brochettes vendues dans le commerce. Il permet d'utiliser un micro-moteur à pile électrique d'une grande autonomie, d'où une grande mobilité du tourne-brochettes, etc.

## Revendications

1. Tourne-brochettes automatique comprenant un support (1) pourvu d'un panneau frontal (1a) et d'un panneau arrière (1b) qui présentent les encoches (3, 4) sur leur bord supérieur pour recevoir des piques de brochettes (2), chaque pique de brochette étant équipée d'une poignée (9) munie d'une roue dentée (10a) concentrique, une vis sans fin (7) animée par un moteur (8) et entraînant en rotation les piques de brochettes par l'intermédiaire de leurs roues dentées associées, caractérisé en ce qu'il comprend des moyens de débrayage automatique d'une roue dentée (10a) par rapport à la vis sans fin (7) d'entraînement en cas de blocage de la pique de brochette associée à ladite roue dentée, sans que l'entraînement des autres piques de brochettes soit perturbé.

2. Tourne-brochettes automatique selon la revendication 1, caractérisé en ce qu'il comprend des moyens d'embrayage automatique des roues dentées (10a) sur la vis sans fin d'entraînement (7).

3. Tourne-brochettes automatique selon la revendication 1 ou 2, caractérisé en ce que chaque encoche (3) du panneau frontal (1a) du support présente un profil coudé dont le bord extérieur du coude est arrondi, le filetage et le sens de rotation de la vis sans fin (7) étant tels que la rotation de la roue dentée (10a) associée à une pique de brochette et entraînée par la vis sans fin tend à maintenir l'axe de la poignée au fond de l'encoche (3).

4. Tourne-brochettes automatique selon la revendication 3, caractérisé en ce que la partie coudée de chaque encoche (3) du panneau frontal présente une largeur qui interdit tout mouvement de bas en haut de l'axe de la poignée associée, de façon à assurer l'engrenage parfait entre la roue dentée associée et la vis sans fin d'entraînement.

5. Tourne-brochettes automatique selon la revendication 3 ou 4, caractérisé en ce que la partie coudée de chaque encoche (3) du panneau frontal présente un bord inférieur (3a) légèrement incliné vers le fond de l'encoche.

6. Tourne-brochettes automatique selon l'une des revendications 3 à 5, caractérisé en ce que chaque encoche (4) du panneau arrière (1b) du support présente un profil identique au profil des encoches (3) du panneau frontal (1a).

7. Tourne-brochettes automatique selon l'une des revendications 3 à 5, caractérisé en ce que chaque encoche (4) du panneau arrière (1b) du support présente un profil coudé, le bord inférieur (4a) de la partie coudée étant parallèle au bord supérieur du panneau arrière, et que le profil du bord extérieur du coude de l'encoche (4) présente un angle droit.

8. Tourne-brochettes automatique selon l'une des revendications précédentes, caractérisé en ce que les panneaux frontal et arrière du support sont reliés entre eux au moyen de deux montants télescopiques (14), l'écartement entre les deux panneaux pouvant être réglé.

9. Tourne-brochettes automatique selon la revendication 8, caractérisé en ce que les panneaux frontal et arrière sont pourvus de glissières (15) permettant de régler l'écartement entre les deux montants télescopiques (14).

10. Tourne-brochettes automatique selon l'une des revendications 1 à 4, caractérisé en ce qu'il est disposé verticalement avec la vis sans fin (7) verticale, et que les encoches (3, 4) des panneaux (1a, 1b) débouchent dans le bord de ces panneaux de façon légèrement inclinée vers le haut.

## Claims

1. Automatic kebab turner comprising a support (1) provided with a front panel (1a) and with a rear panel (1b) which exhibit slots (3, 4) on their upper edge for accommodating kebab skewers (2), each kebab skewer being equipped with a handle (9) equipped with a concentric cog wheel (10a), a worm (7) driven by a motor (8) and rotationally driving the kebab skewers by means of their associated cog wheels, characterized in that it comprises means for automatically disengaging a cog wheel (10a) from the driving worm (7) in the event of the kebab skewer associated with the said cog wheel locking up, without the drive of the other kebab skewers being disrupted.

2. Automatic kebab turner according to Claim 1, characterized in that it comprises means for automatically engaging the cog wheels (10a) with the driving worm (7).

3. Automatic kebab turner according to Claim 1 or 2, characterized in that each slot (3) in the front panel (1a) of the support exhibits an elbowed profile, in which the outer edge of the elbow is rounded, the screw thread and direction of rotation of the worm (7) both being such that the rotation of the cog wheel (10a) associated with a kebab skewer and driven by the worm tends the keep the axis of the handle at the bottom of the slot (3).

4. Automatic kebab turner according to Claim 3, characterized in that the elbowed part of each slot (3) of the front panel has a width which prevents any upward movement of the axis of the associated handle, so as to ensure perfect meshing between the associated cog wheel and the driving worm.

5. Automatic kebab turner according to Claim 3 or 4, characterized in that the elbowed part of each slot (3) of the front panel has a lower edge (3a) slightly inclined toward the bottom of the slot.

6. Automatic kebab turner according to one of Claims 3 to 5, characterized in that each slot (4) on the rear panel (1b) of the support has a profile identical to the profile of the slots (3) on the front panel (1a).

7. Automatic kebab turner according to one of Claims 3 to 5, characterized in that each slot (4) on the rear panel (1b) of the support has an elbowed profile, the lower edge (4a) of the elbowed part being parallel to the upper edge of the rear panel, and that the profile of the outer edge of the elbow of the slot (4) exhibits a right angle.

8. Automatic kebab turner according to one of the preceding claims, characterized in that the front and rear panels of the support are joined together by means of two telescopic members (14), it being possible for the separation between the two panels to be adjusted.

9. Automatic kebab turner according to Claim 8, characterized in that the front and rear panels are provided with slideways (15) making it possible to adjust the separation between the two telescopic members (14).

10. Automatic kebab turner according to one of Claims 1 to 4, characterized in that it is located vertically with the worm (7) vertical and that the slots (3, 4) of the panels (1a, 1b) emerge in the edge of the these panels in a way which is slightly inclined upwards.

## Patentansprüche

1. Automatischer Grillspießwender mit einem Träger (1), der eine vordere Platte (1a) und eine hintere Platte (1b) aufweist, die an ihrem oberen Rand mit Kerben (3, 4) zur Aufnahme von Grillspießen (2) ausgebildet sind, wobei jeder Grillspieß mit einem Griff (9) vergehen ist, der mit einem konzentrischen Zahnrad (10a) ausgestattet ist, und mit einer durch einen Motor (8) angetriebenen Schnecke (7), die die Grillspieße mittels ihrer zugehörigen Zahnräder zur Drehung antreibt, dadurch gekennzeichnet, daß er Mittel zum automatischen Ausrücken eines Zahnrads (10a) bezüglich der Antriebsschnecke (7) bei einer Blockierung des dem Zahnrad zugeordneten Grillspießes ohne Unterbrechung des Antriebs der anderen Grillspieße aufweist.

2. Automatischer Grillspießwender nach Anspruch 1, dadurch gekennzeichnet, daß er Mittel zum automatischen Einrücken von Zahnrädern (10a) an der Antriebsschnecke (7) aufweist.

3. Automatischer Grillspießwender nach Anspruch 1 oder 2, dadurch gekennzeichnet, daß jede Kerbe (3) der vorderen Platte (1a) des Trägers ein gekrümmtes Profil aufweist, dessen Außenrand abgerundet ist, wobei das Gewinde und die Drehrichtung der Schnecke (7) derart sind, daß die Drehung des einem Grillspieß zugeordneten Zahnrads (10a), das durch die Schnecke angetrieben wird, dazu neigt, die Achse des Griffs, am Boden der Kerbe (3) zu halten.

4. Automatischer Grillspießwender nach Anspruch 3, dadurch gekennzeichnet, daß der gekrümmte Teil jeder Kerbe (3) der vorderen Platte eine Breite aufweist, die jegliche Bewegung der zugehörigen Griffachse von unten nach oben verhindert, so daß ein perfekter Eingriff zwischen dem zugehörigen Zahnrad und der Antriebsschnecke gewährleistet wird.

5. Automatischer Grillspießwender nach Anspruch 3 oder 4, dadurch gekennzeichnet, daß der gekrümmte Teil jeder Kerbe (3) der vorderen Platte einen unteren Rand (3a) aufweist, der leicht zum Boden der Kerbe hin geneigt ist.

6. Automatischer Grillspießwender nach einem der Ansprüche 3 bis 5, dadurch gekennzeichnet, daß jede Kerbe (4) der hinteren Platte (1b) des Trägers ein Profil aufweist, das mit dem Profil der Kerben (3) der vorderen Platte (1a) identisch ist.

7. Automatischer Grillspießwender nach einem der Ansprüche 3 bis 5, dadurch gekennzeichnet, daß jede Kerbe (4) der hinteren Platte (1b) des Trägers ein gekrümmtes Profil aufweist, wobei dar untere Rand (4a) des gekrümmten Teils parallel zum oberen Rand der hinteren Platte verläuft, und daß das Profil des Außenrands der Krümmung der Kerbe (4) einen rechten Winkel aufweist.

8. Automatischer Grillspießwender nach einem der vorhergehenden Ansprüche, dadurch gekennzeichnet, daß die vordere und die hintere Platte des Trägers mittels zweier zusammenschiebbarer Beine (14) miteinander verbunden sind, wobei der Abstand zwischen den beiden Platten eingestellt werden kann.

9. Automatischer Grillspießwender nach Anspruch 8, dadurch gekennzeichnet, daß die vordere und die hintere Platte mit Gleitschienen (15) versehen sind, die ein Einstellen des Abstands zwischen den beiden zusammenschiebbaren Beinen (14) gestatten.

10. Automatischer Grillspießwender nach einem der Ansprüche 1 bis 4, dadurch gekennzeichnet, daß er vertikal angeordnet ist, wobei die Schnecke (7) vertikal liegt, und daß die Kerben (3, 4) der Platten (1a, 1b) leicht nach oben geneigt in den Rand dieser Platten münden.
